(19) Europäisches Patentamt / European Patent Office / Office européen des brevets

(11) **EP 4 481 599 A1**

(12) **DEMANDE DE BREVET EUROPEEN**

(43) Date de publication:
**25.12.2024 Bulletin 2024/52**

(21) Numéro de dépôt: **24182470.5**

(22) Date de dépôt: **17.06.2024**

(51) Classification Internationale des Brevets (IPC):
**G06F 21/33** (2013.01) **G06F 21/41** (2013.01)
**G06F 21/62** (2013.01) **H04L 9/40** (2022.01)

(52) Classification Coopérative des Brevets (CPC):
**G06F 21/6245; G06F 21/33; G06F 21/41;
H04L 63/0815; H04L 63/0823; H04L 63/102**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **20.06.2023 FR 2306352**

(71) Demandeur: **Orange**
**92130 Issy-les-Moulineaux (FR)**

(72) Inventeurs:
• **PETIT, Stéphane**
  **92326 Chatillon (FR)**
• **HEDRICH, Anke**
  **92326 Chatillon (FR)**
• **BERTECHE, Olivier**
  **92326 Chatillon (FR)**

(54) **PROCÉDÉS DE GÉNÉRATION, DE FOURNITURE ET DE GESTION DE PROFILS D'IDENTITÉS CERTIFIÉES, ET PORTEFEUILLE ÉLECTRONIQUE D'IDENTITÉS**

(57) L'invention concerne des procédés de génération, de fourniture et de gestion de profils d'identités certifiées, et un portefeuille électronique d'identités.

Un objet de l'invention est un procédé de génération de profils d'identités certifiées associés à un compte utilisateur d'un portefeuille électronique d'identités, le procédé de génération comportant :
- sélectionner, à destination d'un profil d'identités certifiées, des données d'identités parmi un ensemble des données d'identités reçues d'au moins un fournisseur d'identité certifiée associé au compte utilisateur, puis
- intégrer des données d'identités sélectionnées dans le profil d'identités certifiées destinataire. Cela réduira les risques d'erreurs de fourniture de service et d'échec de fourniture de service. Un autre avantage est de réduire le délai de transmission de données d'identités par le portefeuille électronique, réduisant ainsi le délai du traitement en cours par le fournisseur de service lors de la requête de données d'identités : enregistrement d'un nouvel utilisateur, fourniture d'un service, etc.

Fig. 1

## Description

**Domaine technique**

L'invention se situe dans le domaine de la gestion de l'identité numérique. Elle concerne des procédés de génération, de fourniture et de gestion de profils d'identités certifiées, et un portefeuille électronique d'identités.

**État de la technique**

De nombreux fournisseurs de service, en ligne ou en proximité, requièrent la mise à disposition d'éléments d'identité d'utilisateur de façon à délivrer leur service. Traditionnellement, dans un monde non numérique, cet apport d'éléments d'identité est réalisé à l'aide de titres physiques émis par des autorités officielles (carte d'identité, permis de conduire, etc.) et de justificatifs divers émis par des tiers certificateurs reconnus (facture d'énergie, facture de télécom, certificat médical, etc.)

Le développement des services accessibles via Internet nécessite la mise en place d'outils dédiés permettant la numérisation des éléments présents sur les supports précités, éventuellement de façon structurée, et autorisant leur partage avec le fournisseur de service après consentement de l'utilisateur. Dans cette optique, le domaine de la gestion d'identité, une solution qui centralise les éléments d'identités de l'utilisateur et autorise, sous le contrôle de l'utilisateur, l'accès du service à tout ou partie des éléments d'identité de l'utilisateur est proposée notamment en utilisant un protocole OIDC (pour « OpenID Connect » en anglais). Par conséquent, aujourd'hui, si un fournisseur de services requiert des données d'identités certifiées notamment pour la création et/ou la modification d'un compte utilisateur pour un ou plusieurs services fournit par ce fournisseur de service, la solution est de mettre en relation le fournisseur de services avec un fournisseur d'identités certifiées auprès duquel l'utilisateur s'est préalablement enregistré.

Mais, le fournisseur de services a alors connaissance du fournisseur d'identités certifiées de l'utilisateur et accès à l'ensemble des données d'identités concernant l'utilisateur chez ce fournisseur d'identités. En outre, un fournisseur d'identités unique peut ne pas disposer de toutes les données d'identités requises par le fournisseur de services.

De plus, le fournisseur d'identité a connaissance de chaque consommation par l'utilisateur d'un des services auxquels il fournit des éléments d'identités de l'utilisateur y compris le moment de consommation du service et quels sont les éléments d'identités que l'utilisateur lui partage. Ainsi, le fournisseur d'identité est capable de générer un profil de consommation de services d'un utilisateur de l'historique des activités de services de l'utilisateur.

C'est, notamment, pour répondre à ces problèmes que le portefeuille électronique d'identités a été envisagé. Ainsi, c'est un système de gestion d'identités permettant de préserver la vie privée des utilisateurs. Le portefeuille électronique est une solution auto-souveraine de l'identité SSI (« Sel-Soverign Identity » en anglais dissociant le fournisseur d'identités de l'émetteur des éléments d'identité vers un fournisseur de service, notamment en utilisant un protocole SIOP (« Self Issued Openid Provider » en anglais).

En effet, un tel portefeuille électronique d'identités récupèrent/collectent des données d'identités, et éventuellement les certificats des éléments d'identités (aussi nommé « ID-token » en anglais), auprès d'un ou plusieurs fournisseurs d'identités distincts sur lesquels il est enregistré. Le portefeuille électronique préserve alors la vie privée de l'utilisateur car il joue le rôle de médiateur entre des fournisseurs de service requérant des données d'identités certifiées et les fournisseurs d'identités auprès desquels l'utilisateur est enregistré. Le fournisseur de services n'a donc pas connaissance des fournisseurs d'identités de l'utilisateur.

De plus, l'utilisation du portefeuille électronique ne nécessite pas de connexion avec le fournisseur d'identités lors de la transmission de données d'identités certifiées au fournisseur de service. La transmission des données d'identités est alors effectuée de manière dite asynchrone puisque la communication des données d'identités au fournisseur de service est effectuée sans que le fournisseur d'identités ne soit impliqué de manière synchrone.

En outre, pour répondre à la requête de données d'identités, l'utilisateur du portefeuille électronique, sélectionne, parmi les données d'identités collectées enregistrées dans le portefeuille électronique, une ou plusieurs données d'identités et autorise leur transmission par le portefeuille électronique au fournisseur de services en réponse à la requête. Ainsi, le fournisseur de services n'a pas accès aux autres données d'identités disponibles dans le portefeuille électronique. L'utilisateur maîtrise alors le partage de ses données d'identités avec un fournisseur de services.

L'utilisation présente néanmoins des inconvénients, tels que notamment :
Des allongements des délais d'enregistrement auprès d'un fournisseur de services, voire des délais de fourniture de services en raison du temps nécessaire à l'utilisateur pour sélectionner pour chaque donnée d'identité requises dans l'ensemble des données d'identités collectés, sachant que cela peut nécessiter pour chaque donnée d'identité, la sélection préalable du fournisseur d'identités source.

En outre, lorsque pour un même type de données d'identités, plusieurs données d'identités ont été collectées auprès de différents fournisseurs d'identités, le risque est que l'utilisateur ne sélectionne pas les mêmes données d'identités pour répondre à un même fournisseur de service (notamment lors d'une demande de confirmation d'identité par le fournisseur de services) ou un deuxième fournisseur de service dialoguant avec un premier fournisseur de service. Cela peut causer des erreurs de fourniture de services (car le fournisseur de service considère avoir à faire à deux utilisateurs distincts), notamment non prise en compte de l'historique, de la fidélité, du profil de l'utilisateur, voire demande de création d'un nouveau compte, etc. ; voire un échec de fourniture de service.

**Exposé de l'invention**

Un des buts de la présente invention est de remédier à des inconvénients/insuffisances de l'état de la technique/ d'apporter des améliorations par rapport à l'état de la technique.

Un objet de l'invention est un procédé de génération de profils d'identités certifiées associés à un compte utilisateur d'un portefeuille électronique d'identités, le procédé de génération comportant :

- sélectionner, à destination d'un profil d'identités certifiées, des données d'identités parmi un ensemble des données d'identités reçues d'au moins un fournisseur d'identité certifiée associé au compte utilisateur, puis
- intégrer des données d'identités sélectionnées dans le profil d'identités certifiées destinataire.

Ainsi, cela réduira les risques d'erreurs de fourniture de service et d'échec de fourniture de service. En effet, pour un même fournisseur de services, le portefeuille électronique d'identités pourra sans risque d'erreur transmettre le même profil d'identités certifiées comportant les mêmes données d'identités à chaque requête de celui-ci.

Un autre avantage est de réduire le délai de transmission de données d'identités par le portefeuille électronique, réduisant ainsi le délai du traitement en cours par le fournisseur de service lors de la requête de données d'identités : enregistrement d'un nouvel utilisateur, fourniture d'un service, etc.

Avantageusement, la sélection d'au moins une donnée d'identité est effectuée en fonction de données d'identités requises par au moins un fournisseur de services.

Avantageusement, la sélection d'au moins une donnée d'identité est effectuée en fonction d'une commande de sélection reçue d'une interface utilisateur.

Avantageusement, le procédé de génération comporte :
enregistrer le profil généré d'identités certifiées.

Avantageusement, lorsque le profil d'identités certifiées est destiné à un type de fournisseur de service, la sélection est effectuée en fonction du type de fournisseur de services associé au profil d'identités certifiées.

Avantageusement, l'intégration des données d'identités sélectionnées dans le profil d'identités certifiées est déclenchée dès que le portefeuille électronique d'identités fournit les données d'identités sélectionnés à un fournisseur de service, le profil d'identités certifiées étant associé au fournisseur de service.

Un objet de l'invention est aussi un procédé de fourniture de données d'identités certifiées à un fournisseur de service, le procédé de fourniture comportant

- récupérer dans les données d'identités d'un profil d'identités certifiées des données d'identités requises par un fournisseur de service, et
- transmettre les données d'identités récupérées du profil d'identités certifiées au fournisseur de services requérant.

Avantageusement, le procédé de fourniture comporte
recevoir un accord de transmission préalablement à la transmission des données d'identités.

Avantageusement, la récupération de données d'identités à destination d'un fournisseur de services est effectuée dans un profil d'identité ayant préalablement servi à la fourniture de données d'identités certifiées au même fournisseur de service.

Un objet de l'invention est également un procédé de gestion de profils d'identités certifiées associé à un compte utilisateur d'un portefeuille électronique d'identités, le procédé de gestion comportant
générer un profil d'identités certifiées selon le procédé de génération de l'invention.

Avantageusement, le procédé de gestion comporte
modifier un profil d'identités certifiées par modification d'au moins une donnée d'identité du profil d'identités certifiées.

Avantageusement, la modification est une modification parmi les suivantes :

- ajouter une donnée d'identité sélectionnée, à destination du profil d'identités certifiées, parmi un ensemble de données d'identités reçues d'au moins un fournisseur d'identité certifiée associé au compte utilisateur ;
- supprimer une donnée d'identité du profil d'identités certifiées.

Avantageusement, le procédé de gestion comporte
fournir des données d'identités à un fournisseur de services selon le procédé de fourniture de l'invention.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un portefeuille électronique d'identités et étant conçus pour commander l'exécution des différentes étapes de ce procédé.

L'invention vise donc aussi un programme comprenant des instructions de code de programme pour l'exécution des étapes du procédé de génération de profils d'identités certifiées selon l'invention et/ou du procédé de fourniture de données d'identités certifiées selon l'invention et/ou du procédé de gestion de profils d'identités certifiées selon l'invention lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore un portefeuille électronique d'identités apte à fournir des données d'identités certifiées comportant un générateur de profils d'identités certifiées associés à un compte utilisateur du portefeuille électronique d'identités, le générateur de profils d'identités certifiées étant apte à :

- sélectionner, à destination d'un profil d'identités certifiées, des données d'identités parmi un ensemble des données d'identités reçues d'au moins un fournisseur d'identité certifiée associé au compte utilisateur, puis
- intégrer des données d'identités sélectionnées dans le profil d'identités certifiées destinataire.

**Brève description des dessins**

Les caractéristiques et avantages de l'invention apparaîtront plus clairement à la lecture de la description, faite à titre d'exemple, et des figures s'y rapportant qui représentent :

[Fig.1], un schéma simplifié du procédé de génération de profil d'identités certifiées selon l'invention,
[Fig.2], un schéma simplifié du procédé de fourniture de données d'identités certifiées selon l'invention,
[Fig.3], un schéma simplifié du procédé de gestion de profil d'identités certifiées selon l'invention,
[Fig.4], un schéma simplifié d'une architecture de communication comportant un portefeuille d'identités certifiées selon l'invention,
[Fig.5], un schéma simplifié de l'interface utilisateur permettant l'accès à un portefeuille électronique de données d'identités certifiées selon l'invention,
[Fig.6a], un schéma simplifié de l'interface utilisateur lors d'une première étape de génération d'un profil selon l'invention dans un premier mode de réalisation,
[Fig.6b], un schéma simplifié de l'interface utilisateur lors d'une deuxième étape de génération d'un profil selon l'invention dans un premier mode de réalisation,
[Fig.7a], un schéma simplifié de l'interface utilisateur lors d'une première étape de génération d'un profil selon l'invention dans un deuxième mode de réalisation,
[Fig.7b], un schéma simplifié de l'interface utilisateur lors d'une deuxième étape de génération d'un profil selon l'invention dans un deuxième mode de réalisation,
[Fig.8], un schéma simplifié de l'interface utilisateur montrant un exemple de profil généré selon l'invention.

**Description des modes de réalisation**

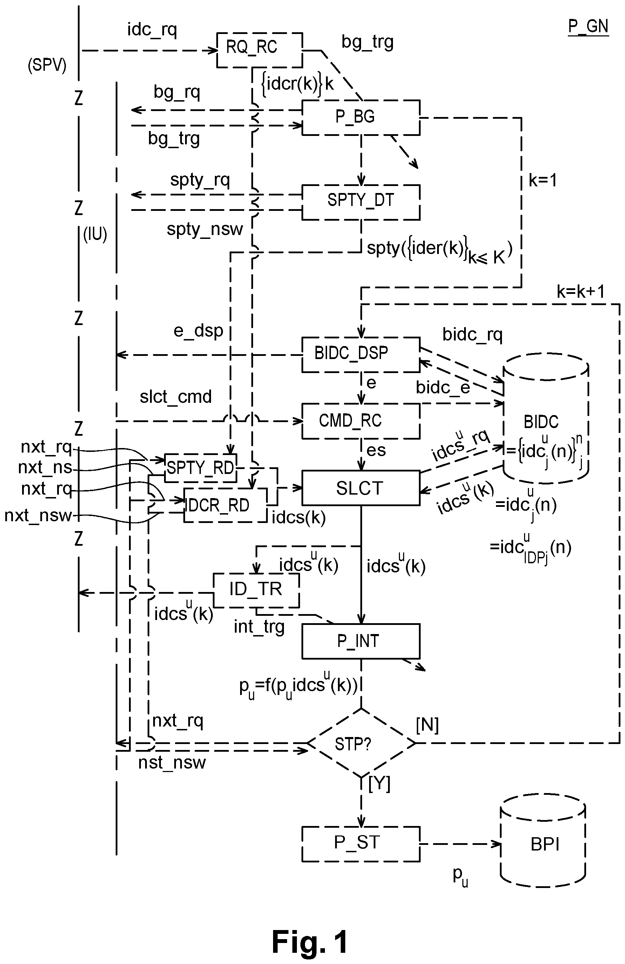

La [Fig. 1] illustre un schéma simplifié du procédé de génération de profil d'identités certifiées selon l'invention.

Le procédé de génération de profils d'identités certifiées P_GN génère des profils d'identités certifiées $p_U$ associés à un compte utilisateur d'un portefeuille électronique d'identités. Le procédé de génération P_GN comportant :

- sélectionner SLCT, à destination d'un profil d'identités certifiées $p_U$, des données d'identités $idcs^U(k)$ parmi un ensemble des données d'identités

$$\left\{ idc_j^U(n) \right\}_j^n$$

reçues d'au moins un fournisseur d'identité certifiée $IDP_j$ associé au compte utilisateur U, puis
- intégrer P_INT des données d'identités sélectionnées $idcs^U(k)$ dans le profil d'identités certifiées destinataire $p_U$.

En particulier, les données d'identités sont des données identités certifiées. Une donnée d'identité certifiée comporte notamment une donnée d'identité propre et un certificat d'identité, notamment un jeton d'identité aussi nommé « ID-token » en anglais. Eventuellement, le certificat comporte la donnée d'identité propre. La donnée d'identité propre est, par exemple, une donnée parmi les suivantes : un nom, un prénom, une adresse postale, une adresse email, un numéro de téléphone, une date de naissance, etc.

En particulier, la sélection de données d'identités certifiées SLCT d'au moins une donnée d'identité est effectuée en fonction de données d'identités requises idcr(k) par au moins un fournisseur de services SPV.

En particulier, lorsque le fournisseur de service requérant SPV a une exigence relative au fournisseur d'identité (notamment une exigence de qualité de fournisseur d'identité, une exigence sur le fournisseur d'identité lui-même), la sélection de données d'identités certifiées SLCT d'au moins une donnée d'identité est effectuée non seulement en fonction de données d'identités requises idcr(k) par au moins un fournisseur de services SPV, mais aussi en fonction de paramètre du fournisseur d'identité dont proviennent les données d'identité certifiées sélectionnables. Les paramètres du fournisseur d'identités comportant notamment la qualité des données d'identités certifiées, la dénomination du fournisseur d'identités, catégorie (par exemple : régalien, commercial...), etc. Ainsi, le fournisseur de service peut refuser les données d'identités provenant de certains fournisseurs d'identités et/ou de fournisseurs d'identités de qualité inférieure à une valeur de qualité seuil et/ou de fournisseurs d'identités non régaliens...

En particulier, la sélection de données d'identités certifiées SLCT d'au moins une donnée d'identité est effectuée en fonction d'une commande de sélection slct_cmd reçue d'une interface utilisateur IU.

En particulier, le procédé de génération P_GN comporte :

- enregistrer P_ST le profil généré d'identités certifiées.

En particulier, lorsque le profil d'identités certifiées $p_U$ est destiné à un type de fournisseur de service spty, la sélection de données d'identités certifiées SLCT est effectuée en fonction du type de fournisseur de services spty associé au profil d'identités certifiées $p_U$.

En particulier, l'intégration P_INT des données d'identités sélectionnées $idcs^U(k)$ dans le profil d'identités certifiées $p_U$ est déclenchée int_trg dès que le portefeuille électronique d'identités fournit ID_TR les données d'identités sélectionnés $idcs^U(k)$ à un fournisseur de service SPV, le profil d'identités certifiées $p_U$ étant associé au fournisseur de service SPV.

En particulier, le procédé de génération P_GN comporte :

- démarrer la génération d'un nouveau profil P_BG associé au compte utilisateur U.

En particulier, le démarrage de la génération d'un nouveau profil P_GB est déclenché bg_trg notamment :

- soit par une requête de nouveau profil b_trg de l'interface utilisateur IU ;
- soit suite à une réception RQ_RC d'une requête de données d'identités certifiées idc_rq d'un fournisseur de service SPV.

Dans le premier cas, le démarrage de la génération d'un nouveau profil P_BG demande b_rq à une interface utilisateur IU si la génération d'un nouveau profil est souhaitée. En réponse à cette demande b_rq, l'interface utilisateur IU déclenche le démarrage de la génération d'un nouveau profil P_BG.

Dans le deuxième cas, soit le procédé de gestion mis en oeuvre par le portefeuille d'identités certifiées (non illustrés sur la [Fig.1]), soit le procédé de génération P_GN comporte :

- recevoir RQ_RC la requête de données d'identités certifiées idc_rq,
- puis déclenche bg_trg le démarrage de la génération d'un nouveau profil P_GB.

En particulier, le procédé de génération P_GN comporte :

- déterminer SPTY_DT un type de fournisseurs de services spty auquel sera associé le profil d'identités certifiées en cours de génération $p_U$.

Dans le premier cas, le type de fournisseurs de services spty est indiqué par l'interface utilisateur IU. Notamment, la détermination de type de fournisseurs de services SPTY_DT reçoit un type de fournisseur spty_nsw de l'interface utilisateur IU, par exemple en réponse à une requête de type de fournisseur de services spty_rq émise par la détermination de type de fournisseurs de services SPTY_DT à l'interface utilisateur U.

Dans le deuxième cas, le type de fournisseurs de services spty est le type du fournisseur de services requérant SPV.

La détermination de type de fournisseurs de services SPTY_DT détermine notamment les données d'identités certifiées $\{idcr(k)\}_{k \le K}$ généralement requises par le type de fournisseur de service spty déterminé : *spty* ($\{idcr(k)\}_{k \le K}$). Par généralement requises est entendu, les données d'identités certifiées associées au type de fournisseur de service enregistrées préalablement à la génération de profil P_GN, et/ou l'historique des données d'identités associées aux fournisseurs de services du type déterminé requérant préalablement à la génération de profil P_GN en cours, et/ou les données d'identités certifiées associées au type de fournisseur de service par apprentissage, etc.

En particulier, le procédé de génération P_GN génère le profil par itération, c'est-à-dire que pour un profil $p_U$ comportant plusieurs données d'identités, le procédé de génération sélectionne SLCT puis intègre P_INT une donnée d'identité après l'autre dans le profil $p_U$.

Par exemple, le démarrage du profil P_BG met le compteur d'itération à 1 : k=1, puis déclenche la sélection SLCT et l'intégration P_INT d'une première donnée d'identités sélectionnés $idcs^U(k=1)$ dans le profil $p_U : p_U = f(p_U = \varnothing, idcs^U(k = 1))$. Le procédé de génération P_GN comporte notamment une itération k=k+1 tant que la génération du profil n'est pas terminée [N] permettant de sélectionner SLCT et d'intégrer une kième donnée d'identités sélectionnés $idcs^U(k)$ dans le profil $p_U$ en cours de génération : $p_U = f(p_U, idcs^U(k))$.

En particulier, dans le cas où la génération de profil P_GN est effectuée en sélectionnant SLCT et intégrant P_INT dans le profil pU une donnée d'identité certifiée sélectionnée idcs(k) en fonction d'une commande slct_cmd reçue d'une interface utilisateur IU, alors le procédé de génération P_GN comporte, notamment une ou plusieurs des étapes suivantes :

- fournir BIDC_DSP des éléments à reproduire e_dsp relatifs aux données d'identités certifiées en fonction des données d'identités certifiées associés au compte utilisateur U disponibles bidc_e dans le portefeuille d'identités certifiées, éventuellement sur requête bidc_rq de la fourniture BIDC_DSP d'éléments à reproduire relatifs aux données d'identités certifiées BIDC_DSP ;
- recevoir CMD_RC une commande de sélection slct_cmd d'un élément reproduit e indiquant à la sélection de données d'identités certifiées SLCT l'élément reproduit sélectionné es en fonction duquel la sélection détermine la donnée d'identité certifiée correspondante ides.

En particulier, les données d'identités certifiées idc provenant d'une ou plusieurs sources d'identités certifiées IDP, IDP1...IDP$_J$ (non illustrés) ont été préalablement enregistrées, par exemple dans une base d'identités certifiées BIDC.

En particulier, dans le cas où la génération de profil P_GN est effectuée en fonction du type de fournisseur de service déterminé spty, alors le procédé de génération P_GN comporte, notamment une ou plusieurs des étapes suivantes :

- lire SPTY_RD les données d'identités certifiées requises par le type de fournisseur de services sélectionné spty. La lecture SPTY_RD indique à la sélection de données d'identités certifiées SLCT une kième donnée d'identité certifiée requises idcr(k).

En particulier, dans le cas où la génération de profil P_GN est effectuée suite à une requête de fourniture de données d'identités certifiées idc_rq d'un fournisseur de service SPV, alors le procédé de génération P_GN comporte, notamment une ou plusieurs des étapes suivantes :

- lire IDCR_RD la donnée d'identité certifiée requise par le fournisseur de services SPV. La lecture IDCR _RD indique à la sélection de données d'identités certifiées SLCT la donnée d'identité certifiée requise idcr(k) ;
- fournir ID_TR la donnée d'identité certifiée sélectionnée idcs(k) au fournisseur de service requérant SPV.

En particulier, la sélection SLCT requiert la donnée d'identité certifiée sélectionnée idcs"_rq notamment à la base d'identités certifiées BIDC qui fournit alors la donnée d'identité certifiée sélectionnée idcs$^U$(k) correspondant notamment à une des données d'identités certifiées fournies par l'un des fournisseurs d'identités certifiées IDP$_j$ : idcs$^U$ (k)=idc$_j^U$(n)= idc$_{IDPj}^U$(n). La base d'identités certifiées BIDC comportant des données d'identités certifiées idc, notamment l'ensemble des données d'identités certifiées fournies par un ou plusieurs fournisseurs d'identités certifiées IDP, IDP$_{j,j=1...J}$ : {idc$_j^U$ (n)}$_j^n$.

En particulier, le procédé de génération P_GN comporte une vérification du stade de génération du profil STP ? après l'intégration P_INT d'une donnée d'identités certifiées sélectionnées dans le profil p$_U$ en cours de génération.

En particulier, dans le cas d'un profil généré en fonction d'un type de fournisseurs de services spty déterminé, la vérification STP ? détermine notamment si toutes les données associées {idcr(k)} à ce type de fournisseur de services déterminé spty ont été fournies : spty({idcr(k)}).

En particulier, dans le cas d'un profil généré en cours de fourniture de données d'identités à un fournisseur de services, la vérification STP ? détermine notamment si toutes les données requises idcr(k) par le fournisseur de services SPV ont été fournies.

En particulier, dans le cas d'un profil généré par sélection slct_cmd par une interface utilisateur IU, la vérification STP ? demande nxt_rq à l'interface utilisateur IU si une nouvelle donnée d'identité certifiée doit être ajoutée au profil p$_U$ en cours de génération, et reçoit, en réponse, une commande nxt_nsw indiquant si le profil est terminé ou si une nouvelle donnée d'identité certifiée doit être ajoutée.

En particulier, si la vérification STP ? détermine qu'une nouvelle donnée d'identités certifiées doit être ajoutée, notamment lorsque toutes les données requises n'ont pas été fournies [N], alors la vérification déclenche une nouvelle itération de la génération de profil k=k+1 permettant permettant de sélectionner SLCT et d'intégrer une kième donnée d'identités sélectionnés idcs$^U$(k) dans le profil p$_U$ en cours de génération :

$$p_U = f\left(p_U, idcs^U(k)\right).$$

En particulier, si la vérification STP ? détermine que le profil est complet (pas de nouvelle donnée d'identités certifiées à ajouter ou toutes les données requises fournies, par exemple) [Y], alors la génération du profil p$_U$ est terminée et la vérification STP ? déclenche éventuellement un enregistrement P_ST du profil généré p$_U$.

En particulier, le procédé de génération comporte l'enregistrement P_ST du profil généré p$_U$, notamment dans une base de profil BPI.

Le procédé de fourniture de données d'identités certifiées d'un profil selon l'invention permet à un utilisateur de consentir à délivrer à un fournisseur de services certaines données d'identité certifiées (parmi un ensemble de données d'identités certifiées qu'il a préalablement obtenus auprès de fournisseurs d'identité). Les données d'identités certifiées transmises à un fournisseur de service peuvent être sauvegardés comme profil d'identité certifié lors de la génération de profil P_GN.

Par exemple, le fournisseur de service SPV adresse une requête au portefeuille électronique mettant en oeuvre le procédé de génération P_GN pour que ce dernier partage, fournisse un certain nombre de données d'identités certifiées.

Eventuellement, l'utilisateur a la possibilité de choisir au moyen d'une interface utilisateur IU les données d'identités à transmettre au fournisseur de services SPV parmi ceux présents dans différents domaines de données d'identités certifiées.

En particulier, les données d'identités certifiées transmises en réponse à la requête du fournisseur de service SPV peuvent être sauvegardées P_ST en tant que profil d'identité certifié.

Ainsi, le profil sauvegardé pourra être réutilisé ultérieurement notamment pour répondre à nouveau à une requête de données d'identités certifiées du même fournisseur de service SPV ou d'un autre fournisseur de services collaborant avec ce premier fournisseur de service.

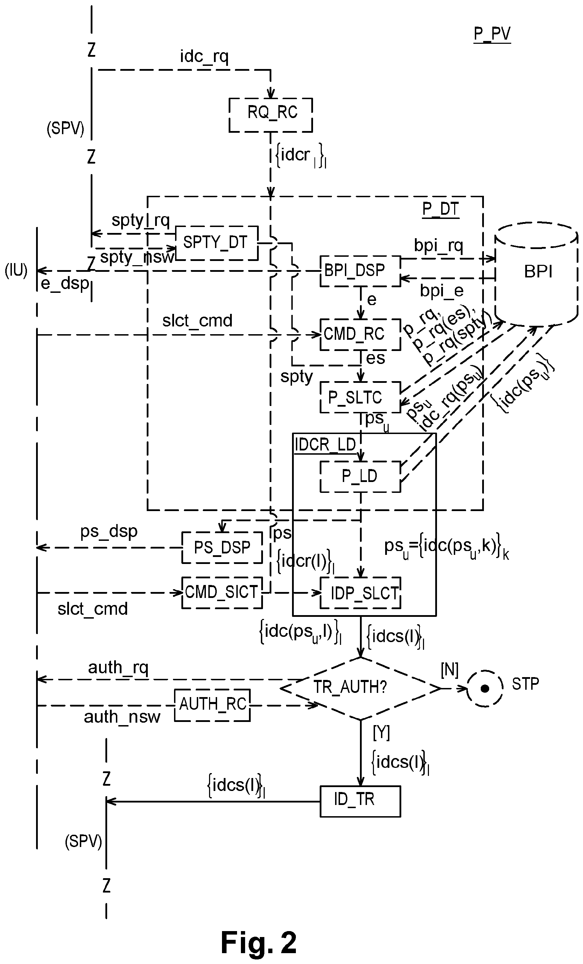

La [Fig.2] illustre un schéma simplifié du procédé de fourniture de données d'identités certifiées selon l'invention.

Le procédé de fourniture de données d'identités certifiées P_PV fournit des données d'identités certifiées $\{ids(1)\}_1$ à un fournisseur de service SPV. Le procédé de fourniture P_PV comportant

- récupérer IDCR_LD dans les données d'identités d'un profil d'identités certifiées $ps = \{idc(ps, k)\}_k$ des données d'identités requises $\{idcr_1\}_1$ par un fournisseur de service SPV, et
- transmettre les données d'identités récupérées du profil d'identités certifiées $\{ids(1)\}_1$ au fournisseur de services requérant SPV.

En particulier, le procédé de fourniture P_PV comporte :

- recevoir AUTH_RC un accord de transmission auth_nsw préalablement à la transmission des données d'identités ID_TR.

En particulier, la récupération de données d'identités IDCR_LD à destination d'un fournisseur de services SPV est effectuée dans un profil d'identité ps ayant préalablement servi à la fourniture de données d'identités certifiées P_PV au même fournisseur de service SPV.

En particulier, le procédé de fourniture P_PV comporte :

- recevoir RQ_RC une requête de données d'identités certifiées idc_rq du fournisseur de service SPV.

En particulier, dans le cas où la fourniture d'identités certifiées P_PV est effectuée en sélectionnant P_SLCT un profil $ps_U$ en fonction d'une commande slct_cmd reçue d'une interface utilisateur IU, alors le procédé de fourniture P_PV comporte, notamment une ou plusieurs des étapes suivantes :

- fournir BPI_DSP des éléments à reproduire e_dsp relatifs à un ou plusieurs profils d'identités certifiées associés au compte utilisateur U disponibles bpi_e dans le portefeuille d'identités certifiées, éventuellement sur requête bpi_rq de la fourniture BPI_DSP d'éléments à reproduire relatifs aux profil d'identités certifiées BPI_DSP ;
- recevoir CMD_RC une commande de sélection slct_cmd d'un élément reproduit e indiquant à la sélection SLCT l'élément reproduit sélectionné es en fonction duquel une sélection de profil P_SLCT détermine le profil correspondant $ps_U$.

En particulier, dans le cas où la fourniture d'identités certifiées P_PV est effectuée en sélectionnant P_SLCT un profil $ps_U$ en fonction du type de fournisseur de service spty du fournisseur de requérant, le procédé de fourniture P_PV comporte :

- déterminer SPTY_DT le type de fournisseurs de services spty correspondant au fournisseur de services requérant SPV.

Notamment, la détermination de type de fournisseur de service SPTY_DT reçoit des données d'informations spty_nsw en provenant du fournisseur de service SPV, tel que le type de fournisseur de service associé au fournisseur de service requérant SPV ou une ou plusieurs informations relatives au fournisseur de service requérant SPV permettant de déterminer le type de fournisseur de service.

En particulier, le procédé de fourniture P_PV comporte :

- sélectionner P_SLCT un profil d'identités certifiées $ps_U$ dont des données d'identités certifiées $idc(ps_U)$ seront fournis au fournisseur de service SPV par la fourniture de données d'identités P_PV.

En particulier, lorsque la sélection de profil P_SLCT sélectionne plusieurs profils susceptibles de répondre à la requête (cas non illustré), la sélection de profil P_SLCT comporte une ou plusieurs des étapes suivantes :

- fournir BPI_DSP des éléments à reproduire e_dsp relatifs aux profils d'identités certifiées présélectionnés susceptibles de répondre à la requête bpi_e dans le portefeuille d'identités certifiées;
- recevoir CMD_RC une commande de sélection slct_cmd d'un élément reproduit e indiquant à la sélection SLCT l'élément reproduit sélectionné es en fonction duquel la sélection de profil P_SLCT détermine le profil correspondant $ps_U$ ;
- charger, récupérer, et/ou recevoir P_LD les données d'identités du profil sélectionné $\{idc(ps_U)\}$ notamment dans une base de profil BPI, éventuellement en réponse à une requête de données d'identités idc_rq(ps).

Ainsi, le fait de présélectionner les profils en fonction de la requête permet de réduire les profils sélectionnables par l'utilisateur et donc les erreurs, voire les échecs de fourniture de service.

En particulier, la sélection de profil P_SLCT charge, récupère, et/ou reçoit, un profil sélectionné $ps_U$, notamment dans une base de profil BPI, éventuellement en réponse à une requête de profil p_rq, la requête de profil comportant notamment soit l'élément sélectionné es : p_rq(es) dans le cas d'une commande de sélection slct_cmd, soit un type de fournisseur de service : p_rq(spty) dans le cas d'une détermination du type SPTY_DT du fournisseur de service requérant SPV : p_rq(spty).

En particulier, la récupération IDCR_LD de données d'identités dans un profil d'identités certifiées comporte :

- charger, récupérer, et/ou recevoir P_LD les données d'identités d'un profil sélectionné $\{idc(ps_U)\}$ notamment dans une base de profil BPI, éventuellement en réponse à une requête de données d'identités idc_rq(ps).

En particulier, le procédé de fourniture P_PV comporte une détermination d'un profil d'identités certifiées P_DT comportant une ou plusieurs des étapes suivantes :

- fournir BPI_DSP des éléments à reproduire e_dsp relatifs à un ou plusieurs profils d'identités certifiées associés au compte utilisateur U disponibles bpi_e dans le portefeuille d'identités certifiées;
- recevoir CMD_RC une commande de sélection slct_cmd d'un élément reproduit e indiquant à la sélection SLCT l'élément reproduit sélectionné es en fonction duquel la sélection de profil P_SLCT détermine le profil correspondant $ps_U$ ;
- déterminer SPTY_DT le type de fournisseurs de services spty correspondant au fournisseur de services requérant SPV ;
- sélectionner un profil d'identités certifiées $ps_U$ dont des données d'identités certifiées $idc(ps_U)$ seront fournis au fournisseur de service SPV par la fourniture de données d'identités P_PV ;
- charger, récupérer, et/ou recevoir P_LD les données d'identités d'un profil sélectionné $\{idc(ps_U)\}$ notamment dans une base de profil BPI, éventuellement en réponse à une requête de données d'identités idc_rq(ps).

En particulier, la récupération IDCR_LD de données d'identités dans un profil d'identités certifiées comporte :

- sélectionner ID/P_SCLT une ou plusieurs données d'identités certifiées $\{icds(ps_U, l)\}_{l,l\leq L,\ l\in[1...K]}$ parmi l'ensemble des données d'identités certifiées d'un profil d'identités certifiées $ps_U$ : $\{idcs(ps_U,k)\}_k$.

En particulier, la sélection ID/P_SCLT de données d'identités certifiées dans le profil sélectionné est fonction des données d'identités requises $\{idcr_1\}_1$ par le fournisseur de service requérant SPV.

En particulier, le procédé de fourniture P_PV comporte une ou plusieurs des étapes suivantes :

- fournir P_DSP des éléments à reproduire ps_dsp relatif au profil sélectionné ;
- recevoir CMD_LSCR une commande de sélection slct_cmd de données d'identités certifiées parmi l'ensemble des données d'identités certifiés d'un profil d'identités certifiées $ps_U$ : $\{idcs(ps_U,k)\}_k$, notamment parmi en fonction des éléments reproduits ps_dsp suite à la fourniture P_DSP d'éléments à reproduire relatif au profil sélectionné ps_dsp.

En particulier, le procédé de fourniture P_PV comporte une vérification d'une autorisation utilisateur de fourniture de données d'identités certifiées TR_AUTH ?.

Dans le cas où, le résultat de la vérification est négatif [N] c'est-à-dire que l'utilisateur ne permet pas :

- la fourniture de données d'identités certifiées au fournisseur de services requérant (non accord éventuellement préalablement enregistré, par exemple lors de la souscription de l'utilisateur au fournisseur de services requérant ou un non accord auth_nsw reçu AUTH_RC de l'utilisateur pendant la mise en oeuvre du procédé de fourniture P_PV par exemple en réponse à une requête d'autorisation auth_rq), et/ou
- la fourniture d'une ou plusieurs des données d'identités récupérées dans le profil sélectionné (en particulier, lorsque la récupération des données d'identités certifiées IDCR_LD dans un profil est effectuée automatiquement par exemple dans un profil sélectionné en fonction du type de fournisseur requérant) (par exemple, non accord auth_nsw reçu AUTH_RC de l'utilisateur pendant la mise en oeuvre du procédé de fourniture P_PV par exemple en réponse à une requête d'autorisation auth_rq), alors le procédé de fourniture P_PV est arrêté STP sans fourniture de données d'identités certifiées provenant d'un profil. Eventuellement, l'arrêt STP de la fourniture de données d'identités certifiées provenant d'un profil P_PV déclenche une fourniture de données d'identités certifiées sans utiliser les profils, voire en constituant un nouveau profil comme proposé par le procédé de génération P_GN notamment tel qu'illustré par la [Fig.1], lorsque c'est l'utilisation des données d'identités certifiées qui ne sont pas autorisées.

Dans le cas où, le résultat de la vérification est positif [Y] c'est-à-dire que l'utilisateur donne son accord pour la fourniture de données d'identités certifiées au fournisseur de services requérant (accord éventuellement préalablement enregistré, par exemple lors de la souscription de l'utilisateur au fournisseur de services requérant ou un accord auth_nsw reçu AUTH_RC de l'utilisateur pendant la mise en oeuvre du procédé de fourniture P_PV par exemple en réponse à une requête d'autorisation auth_rq), alors le procédé de fourniture P_PV est transmet ID_TR les données d'identités certifiées provenant du profil sélectionné $\{idcs(1)\}_1$.

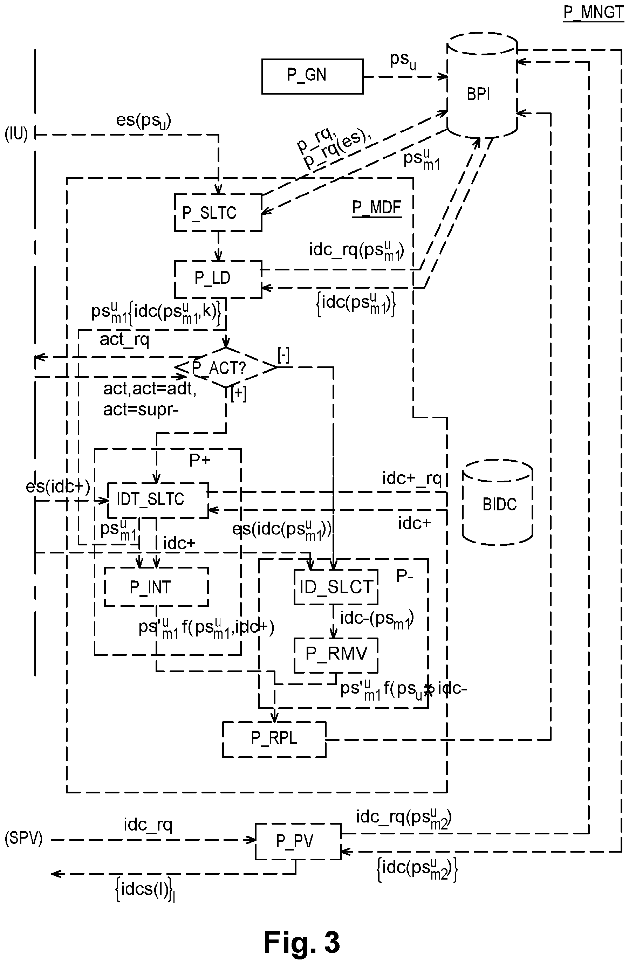

La [Fig.3] illustre un schéma simplifié du procédé de gestion de profil d'identités certifiées selon l'invention.

Le procédé de gestion P_MNGT gère des profils d'identités certifiées $p_U$ associé à un compte utilisateur U d'un portefeuille électronique d'identités. Le procédé de gestion P_MNGT comporte

- générer P_GN un profil d'identités certifiées selon l'invention (notamment tel qu'illustré par la [Fig.1]).

En particulier, le procédé de gestion P_MNGT comporte

- modifier P_MDF un profil d'identités certifiées $ps^U_{m1}$ par modification d'au moins une donnée d'identité du profil d'identités certifiées $idc(ps^U_{m1})$.

En particulier, la modification P_MDF est une modification parmi les suivantes :

- ajouter $P_+$ une donnée d'identité sélectionnée idc+, à destination du profil d'identités certifiées $ps^U_{m1}$, parmi un ensemble de données d'identités reçues d'au moins un fournisseur d'identité certifiée associé au compte utilisateur IDP, $IDP_1...IDP_J$ (non illustrés);
- supprimer P_ une donnée d'identité du profil d'identités certifiées $idc\_(\ ps^U_{m1})$.

En particulier, le procédé de gestion P_MNGT comporte :

- fournir des données d'identités $\{idcs(1)\}_1$ à un fournisseur de services SPV selon l'invention (notamment tel qu'illustré par la [Fig.2]).

En particulier, le procédé de gestion P_MNGT comporte :

- sélectionner P_SLCT un profil d'identités certifiées $ps_U$ dont les données d'identités certifiées $idc(ps_U)$ seront gérées par la gestion de profil P_MNGT.

En particulier, la modification P_MDF comporte :

- sélectionner P_SLCT un profil d'identités certifiées $ps^U_{m1}$ dont au moins une donnée d'identité certifiée $idc(ps^U_{m1})$ sera modifiées par la modification P_MDF.

En particulier, dans le cas où la gestion de profils P_MNGT, notamment la modification P_MDF, est effectuée en sélectionnant P_SLCT un profil $ps_U$, respectivement $ps^U_{m1}$, en fonction d'une commande slct_cmd reçue d'une interface utilisateur IU, alors le procédé de gestion P_MNGT, respectivement la modification P_MDF, comporte, notamment une ou plusieurs des étapes suivantes :

- fournir BPI_DSP (non illustré) des éléments à reproduire e_dsp relatifs à un ou plusieurs profils d'identités certifiées associés au compte utilisateur U disponibles bpi_e dans le portefeuille d'identités certifiées, éventuellement sur requête bpi_rq de la fourniture BPI_DSP d'éléments à reproduire relatifs aux profil d'identités certifiées BPI_DSP ;
- recevoir CMD_RC (non illustré) une commande de sélection slct_cmd d'un élément reproduit e indiquant à la sélection SLCT l'élément reproduit sélectionné $es(ps_U)$ en fonction duquel une sélection de profil P_SLCT détermine le profil correspondant $ps_U$.

En particulier, la sélection de profil P_SLCT charge, récupère, et/ou reçoit, un profil sélectionné $ps^U_{m1}$, notamment dans une base de profil BPI, éventuellement en réponse à une requête de profil p_rq, la requête de profil comportant notamment l'élément sélectionné es : p_rq(es).

En particulier, le procédé de gestion P_MNGT, respectivement la modification P_MDF, comporte :

- charger, récupérer, et/ou recevoir P_LD les données d'identités d'un profil sélectionné $\{idc(ps^U_{m1})\}$ notamment dans une base de profil BPI, éventuellement en réponse à une requête de données d'identités $idc\_rq(ps^U_{m1})$.

En particulier, la modification P_MDF comporte :

- déterminer le type act de modification à mettre en oeuvre ACT ?, la détermination ACT? déclenchant une modification P+, P- déterminée en fonction du type de modification déterminée act=ad+, act=supr-.

En particulier, la détermination ACT? du type act de modification reçoit le type de modification act, act=ad+, act=supr- d'une interface utilisateur IU éventuellement en réponse à une requête de type de modification act_rq notamment de la détermination ACT ?.

Notamment, lorsque la détermination ACT? détermine une modification de type ajout d'une donnée d'identités certifiés dans le profil : [+], alors la détermination déclenche

- ajouter $P_+$ une donnée d'identité sélectionnée idc+, à destination du profil d'identités certifiées $ps^U_{m1}$, parmi un ensemble de données d'identités reçues d'au moins un fournisseur d'identité certifiée associé au compte utilisateur IDP, $IDP_1...IDP_J$ (non illustrés); Notamment, lorsque la détermination ACT? détermine une modification de type suppression d'une donnée d'identités certifiés dans le profil : [-], alors la détermination déclenche
- supprimer $P_-$ une donnée d'identité du profil d'identités certifiées $idc_-(ps^U_{m1})$.

En particulier, l'ajout P+ d'une donnée d'identité certifiée idc+ dans un profil sélectionné $ps_U$ comporte

- sélectionner ID+_SLCT, à destination du profil d'identités certifiées sélectionné $ps_U$ , une donnée d'identité supplémentaire idcs+ parmi un ensemble

$$\left\{ idc^U_j(n) \right\}^n_j$$

des données d'identités reçues d'au moins un fournisseur d'identité certifiée $IDP_j$ associé au compte utilisateur U, puis
- intégrer P_INT la données d'identité supplémentaire sélectionnée idc+=idcs$^U$(k) dans le profil d'identités certifiées destinataire $ps_U$.

En particulier, lorsque la modification de profil P_GN est effectuée en sélectionnant ID+_SLCT et intégrant P_INT dans le profil sélectionné $ps_U$ une donnée d'identité certifiée supplémentaire sélectionnée idc+ en fonction d'une sélection es(icd$_+$) reçue d'une interface utilisateur IU :

- la sélection d'une donnée d'identité supplémentaire ID+_SLCT, aussi nommée sélection supplémentaire, reçoit d'une interface utilisateur un élément reproduit sélectionné associé à une donnée d'identité certifiée sélectionnée supplémentaire idc+.

En particulier, la sélection supplémentaire ID+_SLCT requiert la donnée d'identité certifiée supplémentaire sélectionnée idc$_+$_rq notamment à la base d'identités certifiées BIDC qui fournit alors la donnée d'identité certifiée supplémentaire sélectionnée icd$_+$ =idcs$^U$(K+1) correspondant notamment à une des données d'identités certifiées fournies par l'un des fournisseurs d'identités certifiées $IDP_j$ : icd$_+$=idcs$^U$(K+1)=idc$_j^U$ (n)= idc$_{IDPj}^U$(n). La base d'identités certifiées BIDC comportant des données d'identités certifiées idc, notamment l'ensemble des données d'identités certifiées fournies par un ou plusieurs fournisseurs d'identités certifiées IDP, $IDP_{j,j=1...J}$ : $\{id_{Cj}^U(n)\}_j^n$.
Notamment, l'ajout P+ comporte, notamment une ou plusieurs des étapes suivantes :

- fournir BIDC_DSP (non illustré) des éléments à reproduire e_dsp relatifs aux données d'identités certifiées en fonction des données d'identités certifiées associés au compte utilisateur U disponibles bidc_e dans le portefeuille d'identités certifiées, éventuellement sur requête bidc_rq de la fourniture BIDC_DSP d'éléments à reproduire relatifs aux données d'identités certifiées BIDC_DSP ;
- recevoir CMD_RC (non illustré) une commande de sélection slct_cmd d'un élément reproduit e indiquant à la sélection de données d'identités certifiées SLCT l'élément reproduit sélectionné es en fonction duquel la sélection détermine la donnée d'identité certifiée supplémentaire correspondante idc+ : es(idc+).

En particulier, l'intégration P_INT intègre une donnée d'identités sélectionnés supplémentaire idc+ = idcs$^U$(K+1) au profil $ps_{m1}^U$ en cours de modification :

$$ps'^U_{m1} = f\left( ps^U_{m1}, idc_+ \right)$$

et fournit le profil modifié ps'$_{m1}^U$ à une substitution P_RPL remplaçant le profil $ps_{m1}^U$ auquel la donnée d'identité supplémentaire idc+ a été ajoutée par le profil modifié ps'$_{m1}^U$, notamment dans la base de profil BPI.
En particulier, le retrait ou suppression P- d'une donnée d'identité certifiée idc_ dans un profil sélectionné $ps_{m1}^U$ comporte

- sélectionner ID_SLCT dans le profil d'identités certifiées sélectionné $ps_{m1}^U$ une donnée d'identité à ôter idc_ parmi l'ensemble des données d'identités

$$\left\{ idc\left( ps^U_{m1} \right) \right\}$$

reçues notamment de la base de profil BPI, puis
- enlever P_RMV la donnée d'identité à ôter sélectionnée idc- du profil d'identités certifiées d'origine $ps_{m1}^U$.

En particulier, lorsque la modification de profil P_GN est effectuée en sélectionnant ID_SLCT et enlevant P_INT du profil sélectionné $ps_{m1}^U$ une donnée d'identité certifiée à ôter sélectionnée idc_ en fonction d'une sélection es(icd($ps_{m1}^U$)) reçue d'une interface utilisateur IU :

- la sélection d'une donnée d'identité à ôter ID_SLCT, aussi nommée sélection de retrait, reçoit d'une interface utilisateur un élément reproduit sélectionné es associé à une donnée d'identité certifiée sélectionnée à ôter idc_.

Notamment, le retrait P- comporte, notamment une ou plusieurs des étapes suivantes

- fournir BIDC_DSP (non illustré) des éléments à reproduire e_dsp relatifs aux données d'identités certifiées du profil d'identités certifiées sélectionnés $ps_{m1}^U$ en fonction des données d'identités certifiées associés au profil sélectionné $ps_{m1}^U$ disponibles bidc_e dans le portefeuille d'identités certifiées, éventuellement sur requête bidc_rq de la fourniture BIDC_DSP d'éléments à reproduire relatifs aux données d'identités certifiées du profil sélectionné ;

- recevoir CMD_RC (non illustré) une commande de sélection slct_cmd d'un élément reproduit e indiquant à la sélection de données d'identités certifiées SLCT l'élément reproduit sélectionné es en fonction duquel la sélection détermine la donnée d'identité certifiée à ôter correspondante idc_ : es(idc_).

En particulier, le retrait P_RMV supprime une donnée d'identités sélectionnés à ôter idc+ = du profil $ps_{m1}^U$ en cours de modification :

$$ps{'}_{m1}^U = f\left(ps_{m1}^U\right)\,\mathcal{D}\,idc_-)$$

et fournit le profil modifié $ps{'}_{m1}^U$ à une substitution P_RPL remplaçant le profil $ps_{m1}^U$ auquel la donnée d'identité à ôter idc_ a été retirée par le profil modifié $ps{'}_{m1}^U$, notamment dans la base de profil BPI.

En particulier, la modification P_MDF comporte :

- substituer P_RPL le profil $ps_{m1}^U$ à partir duquel la modification a été mise en oeuvre par le profil modifié $ps{'}_{m1}^U$ résultant de la modification, notamment dans la base de profil BPI.

La fourniture de données d'identités certifiées P_PV fournit des données d'identités certifiées $\{ids(1)\}_1$ à un fournisseur de service SPV. Le procédé de fourniture P_PV comportant

- récupérer (non illustré) dans les données d'identités d'un profil d'identités certifiées $ps_{m2}^U$ des données d'identités requises idc_rq par un fournisseur de service SPV, et
- transmettre (non illustré) les données d'identités récupérées du profil d'identités certifiées $\{ids(1)\}_1$ au fournisseur de services requérant SPV.

Eventuellement, la fourniture de données certifiées P_PV comporte

- charger, récupérer, et/ou recevoir (non illustré) les données d'identités d'un profil sélectionné $\left\{idc\left(ps_{m2}^U\right)\right\}$ notamment dans une base de profil BPI, éventuellement en réponse à une requête de données d'identités $idc\_rq\left(ps_{m2}^U\right)$.

Dans un mode de réalisation particulier d'au moins un des procédés précédemment décrit, un ou plusieurs de ces procédés est mis en oeuvre sous la forme d'un programme comprenant des instructions de code de programme pour l'exécution des étapes du procédé de génération de profils d'identités certifiées et/ou du procédé de fourniture de données d'identités certifiées et/ou du procédé de gestion de profils d'identités certifiées lorsque ledit programme est exécuté par un processeur.

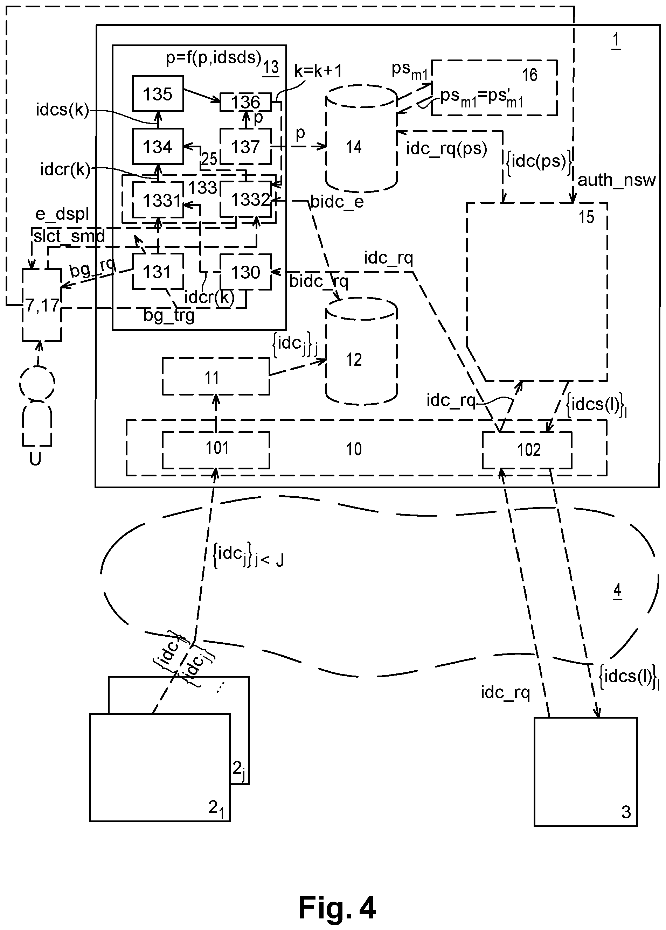

La [Fig.4] illustre un schéma simplifié d'une architecture de communication comportant un portefeuille d'identités certifiées selon l'invention.

Le portefeuille électronique d'identités certifiées 1 est apte à fournir des données d'identités certifiées comportant un générateur 13 de profils d'identités certifiées associés à un compte utilisateur U du portefeuille électronique d'identités 1, le générateur 13 de profils d'identités certifiées étant apte à :

- sélectionner SLCT, à destination d'un profil d'identités certifiées $p_U$, des données d'identités $idcs^U(k)$ parmi un ensemble des données d'identités

$$\left\{idc_j^U(n)\right\}_j^n$$

reçues d'au moins un fournisseur d'identité certifiée $IDP_j$ associé au compte utilisateur U, puis
- intégrer P_INT des données d'identités sélectionnées $idcs^U(k)$ dans le profil d'identités certifiées destinataire $p_U$.

En particulier, une architecture de communication comportant le portefeuille électronique d'identités certifiées 1 comporte un ou plusieurs des dispositifs suivants :

- un ou plusieurs fournisseurs d'identités $2_1...2_J$ ;
- au moins un fournisseur de services 3 ;
- une interface utilisateur 7, 17 ;
- au moins un réseau de communication 4 permettant au portefeuille électronique d'identités certifiées 1 de recevoir des données d'identités certifiées d'un fournisseur d'identités $2_1...2_J$ et/ou de transmettre des données d'identités certifiées à un fournisseur de services 3.

En particulier, le portefeuille électronique d'identités certifiées 1 comporte :

- un gestionnaire de profil d'identités certifiées 16 apte à gérer des profils d'identités certifiées $p_U$ associé à un compte utilisateur U du portefeuille électronique d'identités 1.

En particulier, le portefeuille électronique d'identités certifiées 1, voire le gestionnaire de profil d'identités certifiées 16 (cas non illustré), comporte

- le générateur de profil d'identités certifiées 13.

En particulier, le portefeuille électronique d'identités certifiées 1, voire le gestionnaire de profil d'identités certifiées 16 (cas non illustré), comporte :

- un fournisseur 15 de données d'identités $\{idcs(1)\}_1$ à un fournisseur de services SPV.

En particulier, le générateur de profils 13 comporte :

- un sélectionneur de données d'identités certifiées 134 apte à sélectionner, à destination d'un profil d'identités certifiées $p_U$, des données d'identités $idcs^U(k)$ parmi un ensemble des données d'identités

$$\left\{ idc_j^U(n) \right\}_j^n$$

reçues d'au moins un fournisseur d'identité certifiée $2_j$ associé au compte utilisateur U,
- un intégrateur 135 apte à intégrer des données d'identités sélectionnées $idcs^U(k)$ fournis par le sélectionneur 134 dans le profil d'identités certifiées destinataire $p_U$.

En particulier, le sélectionneur de données d'identités certifiées 134 est apte à effectuer la sélection en fonction de données d'identités requises $idcr(k)$ par au moins un fournisseur de services SPV.

En particulier, le sélectionneur de données d'identités certifiées 134 est apte à effectuer la sélection en fonction d'une commande de sélection slct_cmd reçue d'une interface utilisateur IU.

En particulier, le générateur de profils 13 comporte :

- un enregistreur de profil 137 apte à enregistrer, stocker, mémoriser le profil généré d'identités certifiées, notamment fourni par l'intégrateur 135.

En particulier, lorsque le profil d'identités certifiées $p_U$ est destiné à un type de fournisseur de service spty, le sélectionneur de données d'identités certifiées 134 est apte à effectuer la sélection en fonction du type de fournisseur de services spty associé au profil d'identités certifiées $p_U$.

En particulier, l'intégrateur 135 des données d'identités sélectionnées $idcs^U(k)$ dans le profil d'identités certifiées $p_U$ est déclenchée int_trg dès que le portefeuille électronique d'identités 1, en particulier le fournisseur 15, fournit les données d'identités sélectionnés $idcs^U(k)$ à un fournisseur de service SPV, le profil d'identités certifiées $p_U$ étant associé au fournisseur de service SPV.

En particulier, le générateur de profils 13 comporte :

- un démarreur 131 apte à démarrer la génération d'un nouveau profil associé au compte utilisateur U.

En particulier, le démarreur 131 est déclenché bg_trg pour un nouveau profil notamment :

- soit par une requête de nouveau profil b_trg de l'interface utilisateur 7, 17 ;
- soit par un récepteur de requête 130 suite à une réception d'une requête de données d'identités certifiées idc_rq d'un fournisseur de service SPV.

Dans le premier cas, le démarreur 131 demande b_rq à une interface utilisateur 7, 17 si la génération d'un nouveau profil est souhaitée. En réponse à cette demande b_rq, l'interface utilisateur 7, 17 déclenche le démarreur 131 pour un nouveau profil.

Dans le deuxième cas, soit le générateur de profils 13, soit le gestionnaire de profil 16 (cas non illustré), soit le portefeuille d'identités certifiées 1 comporte :

- un récepteur de requête de données d'identités certifiées 130 apte à recevoir RQ_RC la requête de données d'identités certifiées idc_rq,
- le démarreur 13 apte à être déclencher bg_trg par le récepteur 130 de telle sorte que le démarreur 13 démarre la génération d'un nouveau profil.

En particulier, le générateur de profils 13 comporte :

- un analyseur de type de fournisseurs de services (non illustré) apte à déterminer le type de fournisseurs de services spty auquel sera associé le profil d'identités certifiées en cours de génération $p_U$.

Dans le premier cas, le type de fournisseurs de services spty est indiqué par l'interface utilisateur 7, 17. Notamment, l'analyseur de type de fournisseurs de service reçoit un type de fournisseur spty_nsw de l'interface utilisateur 7, 17, par exemple en réponse à une requête de type de fournisseur de services spty_rq émise par à l'interface utilisateur 7, 17.

Dans le deuxième cas, le type de fournisseurs de services spty est le type du fournisseur de services requérant 3.

L'analyseur de type de fournisseurs de service est notamment apte à déterminer les données d'identités certifiées $\{idcr(k)\}_{k \leq K}$ généralement requises par le type de fournisseur de service spty déterminé : $spty(\{idcr(k)\}_{k \leq K})$. Par généralement requises est entendu, les données d'identités certifiées associées au type de fournisseur de service enregistrées préalablement à la génération de profil, et/ou l'historique des données d'identités associées aux fournisseurs de services du type déterminé requérant préalablement à la génération de profil en cours, et/ou les données d'identités certifiées associées au type de fournisseur de service par apprentissage, etc.

En particulier, le générateur de profils 13 est apte à générer le profil par itération, c'est-à-dire que pour un profil $p_U$ comportant plusieurs données d'identités, le procédé de génération est apte à sélectionner puis intégrer une donnée d'identité après l'autre dans le profil $p_U$.

Par exemple, le démarreur 131 est apte à mettre le compteur d'itération à 1 : k=1, puis déclenche le sélectionneur 134 et l'intégrateur 135 pour une première donnée d'identités sélectionnés $idcs^U(k=1)$ dans le profil $p_U$ : $p_U = f(p_U = \varnothing, idcs^U(k=1))$. Le générateur de profils 13 est notamment apte à mettre en oeuvre une itération k=k+1 tant que la génération du profil n'est pas terminée permettant de sélectionner et d'intégrer une kième donnée d'identités sélectionnés $ides^U(k)$ dans le profil $p_U$ en cours de génération : $p_U = f(p_U, idcs^U(k))$.

En particulier, dans le cas où le générateur de profils 13 est apte à effectuer la génération d'un profil en sélectionnant et intégrant dans le profil $p_U$ une donnée d'identité certifiée sélectionnée idcs(k) en fonction d'une commande slct_cmd reçue d'une interface utilisateur 7, 17, alors le générateur de profils 13 comporte, notamment un ou plusieurs des dispositifs suivants :

- un fournisseur d'éléments à reproduire 1332 apte à fournir des éléments à reproduire e_dsp relatifs aux données d'identités certifiées en fonction des données d'identités certifiées associés au compte utilisateur U disponibles bidc_e dans le portefeuille d'identités certifiées, éventuellement sur requête bidc_rq de la fourniture d'éléments à reproduire relatifs aux données d'identités certifiées;
- un récepteur de commande de sélection 1332 apte à recevoir une commande de sélection slct_cmd d'un élément reproduit e indiquant au sélectionneur de données d'identités certifiées 134 l'élément reproduit sélectionné es en fonction duquel la sélection détermine la donnée d'identité certifiée correspondante ides.

Le fournisseur d'éléments à reproduire et le récepteur de commande étant soit un seul et même dispositif 1332, soit des dispositifs distincts.

En particulier, les données d'identités certifiées idc provenant d'une ou plusieurs sources d'identités certifiées 2, $2_1...2_J$ ont été préalablement enregistrées, par exemple dans une base d'identités certifiées 12.

En particulier, le portefeuille électronique de données d'identités 1 comporte la base d'identités certifiées 12.

En particulier, dans le cas où le générateur de profils 13 est apte à effectuer la génération en fonction du type de fournisseur de service déterminé spty, alors le générateur de profils 13 comporte, notamment :

- un lecteur de données certifiées requises 1331 apte à lire les données d'identités certifiées requises par le type de fournisseur de services sélectionné spty. Le lecteur indique au sélecteur 134 de données d'identités certifiées une kième donnée d'identité certifiée requises idcr(k).

En particulier, dans le cas où le générateur de profils 13 est apte à effectuer la génération suite à une requête de fourniture de données d'identités certifiées idc_rq d'un fournisseur de service 3, alors le générateur de profils 13 comporte, notamment un ou plusieurs des dispositifs suivants :

- un lecteur de données d'identités certifiées requises 1331 apte à lire la donnée d'identité certifiée requise par le fournisseur de services 3. Le lecteur de données d'identités certifiées requises 1331 indique au sélecteur de données d'identités certifiées 134 la donnée d'identité certifiée requise idcr(k) ;
- un transmetteur de donnée d'identité certifiée (non illustré) apte à fournir la donnée d'identité certifiée sélectionnée idcs(k) par le sélectionneur 134 au fournisseur de service requérant 3.

En particulier, le sélectionneur 134 est apte à requérir la donnée d'identité certifiée sélectionnée $idcs^U\_rq$ notamment à la base d'identités certifiées 12 qui fournit alors la donnée d'identité certifiée sélectionnée $idcs^U(k)$ correspondant notamment à une des données d'identités certifiées fournies par l'un des fournisseurs d'identités certifiées $2_j$ : $idcs^U(k)=idc_j^U(n)= idc_{IDPj}^U(n)$. La base d'identités certifiées 12 comporte des données d'identités certifiées idc, notamment l'ensemble des données d'identités certifiées fournies par un ou plusieurs fournisseurs d'identités certifiées 2, $2_{j,j=1...J}$ : $\{idc_j^U(n)\}_j^n$.

En particulier, le générateur de profils 13 comporte un vérificateur 136 du stade de génération du profil apte à être mis en oeuvre après l'intégrateur 135 d'une donnée d'identités certifiées sélectionnées dans le profil $p_U$ en cours de génération.

En particulier, dans le cas d'un profil généré en fonction d'un type de fournisseurs de services spty déterminé, le vérificateur 136 est apte à déterminer notamment si toutes les données associées $\{idcr(k)\}$ à ce type de fournisseur de services déterminé spty ont été fournies : $spty(\{idcr(k)\})$.

En particulier, dans le cas d'un profil généré en cours de fourniture de données d'identités à un fournisseur de services, le vérificateur 136 est apte à déterminer notamment si toutes les données requises idcr(k) par le fournisseur de services 3 ont été fournies.

En particulier, dans le cas d'un profil généré par sélection slct_cmd par une interface utilisateur 7, 17, le vérificateur 136 est apte à demander nxt_rq à l'interface utilisateur 7, 17 si une nouvelle donnée d'identité certifiée doit être ajoutée au profil $p_U$ en cours de génération, et à recevoir, en réponse, une commande nxt_nsw indiquant si le profil est terminé ou si une nouvelle donnée d'identité certifiée doit être ajoutée.

En particulier, si le vérificateur 136 détermine qu'une nouvelle donnée d'identités certifiées doit être ajoutée, notamment lorsque toutes les données requises n'ont pas été fournies, alors le vérificateur 136 est apte à déclencher une nouvelle itération de la génération de profil k=k+1 permettant permettant de sélectionner SLCT et d'intégrer une kième donnée d'identités sélectionnés $idcs^U(k)$ dans le profil $p_U$ en cours de génération :

$$: p_U = f\left( p_U, idcs^U(k) \right).$$

En particulier, si le vérificateur 136 détermine que le profil est complet (pas de nouvelle donnée d'identités certifiées à ajouter ou toutes les données requises fournies, par exemple) [Y], alors la génération du profil $p_U$ est terminée et le vérificateur 136 est apte à déclencher éventuellement un enregistreur 137 apte à enregistrer le profil généré $p_U$.

En particulier, le générateur de profils 13 comporte l'enregistreur 137 apte à enregistrer le profil généré $p_U$, notamment dans une base de profils 14.

En particulier, le portefeuille électronique de données d'identités 1 comporte la base de profils d'identités certifiées 14.

En particulier, le gestionnaire de profil d'identités certifiées 16 comporte

- un modificateur (non illustré) de profil d'identités certifiées $ps^U_{m1}$ apte à modifier au moins une donnée d'identité du profil d'identités certifiées $idc(ps^U_{m1})$.

En particulier, le modificateur comporte au moins un dispositif parmi les suivants:

- un intégrateur apte à ajouter $P_+$ une donnée d'identité sélectionnée idc+ dans le profil d'identités certifiées $ps^U_{m1}$, parmi un ensemble de données d'identités reçues d'au moins un fournisseur d'identité certifiée associé au compte utilisateur 2, $2_1...2_J$;
- un soustracteur apte à supprimer une donnée d'identité du profil d'identités certifiées $idc_-(ps^U_{m1})$.

En particulier, le gestionnaire de profils 16 comporte :

- un sélectionneur de profils (non illustré) apte à sélectionner un profil d'identités certifiées $ps_U$ dont les données d'identités certifiées $idc(ps_U)$ seront gérées par le gestionnaire de profils 16.

En particulier, le gestionnaire de profil d'identités certifiées 16, respectivement le modificateur de profils, comporte :

- un chargeur/récepteur de données d'identités certifiées d'un profil (non illustré) apte à charger, récupérer, et/ou recevoir les données d'identités d'un profil sélectionné $\{idc(ps^U_{m1})\}$ notamment dans une base de profil 14, éventuellement en réponse à une requête de données d'identités $idc\_rq(ps^U_{m1})$.

En particulier, le gestionnaire de profils 16, voire le modificateur de profils, comporte :

- un enregistreur de profils apte à substituer le profil $ps_{m1}^U$ à partir duquel la modification a été mise en oeuvre par le profil modifié $ps'_{m1}^U$ résultant de la modification, notamment dans la base de profils 12.

Le fournisseur de données d'identités certifiées 15 est apte à fournir des données d'identités certifiées $\{ids(1)\}_1$ à un fournisseur de service 3. Le fournisseur de données d'identités certifiées 15 comporte

- un chargeur de données d'identités certifiées (non illustré) apte à récupérer parmi les données d'identités d'un profil d'identités certifiées $ps^U_{m2}$ des données d'identités requises idc_rq par un fournisseur de service 3, et
- un transmetteur de données d'identités certifiées (non illustré) apte à fournir les données d'identités récupérées du profil d'identités certifiées $\{ids(1)\}_1$ au fournisseur de services requérant 3.

Eventuellement, le fournisseur de données d'identités certifiées 15 comporte

- un chargeur de données d'identités certifiées (non illustré) apte à charger, récupérer, et/ou recevoir les données d'identités d'un profil sélectionné $\left\{ idc\left( ps^U_{m2} \right) \right\}$ notamment dans une base de profil 14, éventuellement en réponse à une requête de données d'identités $idc\_rq\left( ps^U_{m2} \right)$.

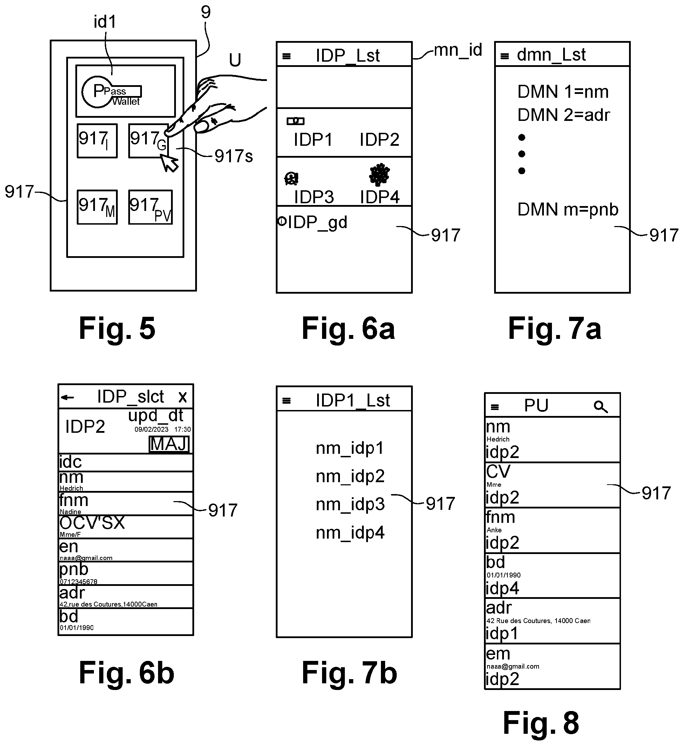

La [Fig.5] illustre un schéma simplifié de l'interface utilisateur permettant l'accès à un portefeuille électronique de données d'identités certifiées selon l'invention.

Un dispositif de communication 9, par exemple un smartphone, une tablette, un ordinateur comporte un écran constituant une interface utilisateur 917. L'utilisateur peut interagir avec un ou plusieurs éléments reproduits par l'écran 9 notamment au moyen d'un périphérique d'interaction, tel qu'une souris, un stylet, etc. ou directement lorsque l'écran 9 est tactile au moyen d'un doigt de l'utilisateur U. Dans le cas d'une interaction au moyen d'un périphérique d'interaction (souris, manette, d'un pavé tactile, etc.), la position d'interaction est indiquée sur l'écran par un curseur 917s.

Le portefeuille électronique de données d'identités certifiées fournit notamment des éléments d'interaction à reproduire 917$_I$, 917$_G$, 917$_M$, 917$_{PV}$ permettant à l'utilisateur de requérir un traitement du portefeuille électronique de données illustré par les figures 1 à 3, voire de déclencher un des dispositifs du portefeuille électronique de données d'identités certifiées tels qu'illustrés par la [Fig.4].

En particulier, l'éléments d'interaction 917$_I$ est apte à commander le chargement de données d'identités certifiées (non illustrés) à partir d'un fournisseur d'identités certifiées notamment dans une base de données d'identités certifiées 12 préalablement à toute génération, gestion de profils selon l'invention.

En particulier, l'éléments d'interaction 917$_G$ est apte à commander le générateur de profils 13, notamment tel qu'illustré par la [Fig.4], et/ou la génération de profils P_GN, notamment tel qu'illustrée par la [Fig.1].

En particulier, l'éléments d'interaction 917$_M$ est apte à commander le gestionnaire de profils 16, notamment tel qu'illustré par la [Fig.4], et/ou la gestion de profils P_MNGT, notamment tel qu'illustrée par la [Fig.2].

En particulier, l'éléments d'interaction 917$_{PV}$ est apte à commander le fournisseur de données d'identités certifiées d'un profil 15, notamment tel qu'illustré par la [Fig.4], et/ou la fourniture de données d'identités certifiées d'un profil P_PV, notamment tel qu'illustrée par la [Fig.3].

La [Fig.5] illustre le cas où l'utilisateur U commande la génération d'un nouveau profil.

La [Fig.6a] illustre un schéma simplifié de l'interface utilisateur lors d'une première étape de génération d'un profil selon l'invention dans un premier mode de réalisation, notamment suite à une commande comme illustrée par la [Fig.5].

Dans ce premier mode de réalisation, l'interface utilisateur 917 propose dans la première étape de génération d'un profil à l'utilisateur de sélectionner le fournisseur d'identités certifiées d'une première donnée d'identités certifiées du profil en cours de génération parmi l'ensemble des fournisseurs d'identités certifiées IDP1, IDP2, IDP3, IDP4 dont les données d'identités certifiées ont été chargées dans la base d'identités certifiées 12 du portefeuille électronique 1.

Dans notre exemple, l'utilisateur sélectionne le deuxième fournisseur d'identités certifiées IDP2 pour cette première donnée d'identités certifiées du profil en cours de génération.

Ainsi, pour une autre donnée d'identités certifiées du profil en cours de génération, par exemple la quatrième donnée, l'utilisateur pourra sélectionner un autre fournisseur d'identités certifiées IDPj, $j \neq 2$, par exemple le quatrième IDP4.

La [Fig.6b] illustre un schéma simplifié de l'interface utilisateur lors d'une deuxième étape de génération d'un profil selon l'invention dans un premier mode de réalisation.

Dans cette deuxième étape, l'utilisateur ayant sélectionné un fournisseur d'identités certifiées, en l'occurrence le deuxième fournisseur d'identités certifiées IDP2, l'interface utilisateur 917 reproduit l'ensemble des données d'identités certifiées fournies IDP_slct par ce deuxième fournisseur d'identités certifiées IDP2 afin de permettre à l'utilisateur de sélectionner l'une de ces données d'identités certifiées.

En l'occurrence, l'écran 917 affiche les données d'identités certifiées suivantes : le nom nm, le prénom fnm, la civilité cv et le sexe sx, un email em, un numéro de téléphone pn, une adresse postale adr, la date de naissance bd...

Dans notre exemple, l'utilisateur sélectionne la donnée d'identité certifiée correspondant au nom nm fourni par le deuxième fournisseur d'identités certifiées IDP2 pour cette première donnée d'identités certifiées du profil en cours de génération.

En particulier, l'écran 917 propose un élément de sélection MAJ permettant de déclencher une mise à jour dans la base de données d'identités certifiées 12 des données d'identités certifiées du deuxième fournisseur d'identités certifiées IDP2 en vérifiant si les données d'identités certifiées disponibles chez le deuxième fournisseur d'identités certifiées IDP2 ont été modifiées et si tel est le cas en remplaçant la donnée d'identités certifiées correspondante dans la base de données d'identités certifiées 12 par la donnée d'identités certifiées modifiées récupérées auprès du deuxième fournisseur d'identités certifiées IDP2.

La [Fig.7a] illustre un schéma simplifié de l'interface utilisateur lors d'une première étape de génération d'un profil selon l'invention dans un deuxième mode de réalisation, notamment suite à une commande comme illustrée par la [Fig.5].

Dans ce deuxième mode de réalisation, l'interface utilisateur 917 propose dans la première étape de génération d'un profil à l'utilisateur de sélectionner un domaine de données d'identités parmi plusieurs domaines DMN1...DMNm, notamment les domaines correspondent aux différents noms nm, aux différentes adresses adr, ... aux différents numéros de téléphone pnb, etc.

Dans notre exemple, l'utilisateur sélectionne le premier domaine d'identités certifiées DMN1 pour cette première donnée d'identités certifiées du profil en cours de génération.

Ainsi, pour une autre donnée d'identités certifiées du profil en cours de génération, par exemple la cinquième donnée, l'utilisateur pourra sélectionner un autre domaine d'identités certifiées DMNm, $m \neq 1$, par exemple le deuxième DMN2.

A noter, que les domaines peuvent être subdivisés en sous-domaine facilitant ainsi la navigation de l'utilisateur dans un grand nombre de données d'identités certifiées.

La [Fig.7b] illustre un schéma simplifié de l'interface utilisateur lors d'une deuxième étape de génération d'un profil selon l'invention dans un deuxième mode de réalisation.

Dans cette deuxième étape, l'utilisateur ayant sélectionné un domaine d'identités certifiées, en l'occurrence le premier domaine d'identités certifiées DMN1, l'interface utilisateur 917 reproduit l'ensemble des données d'identités certifiées DMN1_lst associées à ce premier domaine d'identités certifiées DMN1 dans la base d'identités certifiées 12 afin de permettre à l'utilisateur de sélectionner l'une de ces données d'identités certifiées.

En l'occurrence, l'écran 917 affiche les données d'identités certifiées suivantes : un nom fourni par le premier fournisseur nm_idp1, un nom fourni par le deuxième fournisseur nm_idp2, un nom fourni par le troisième fournisseur nm_idp3, un nom fourni par le quatrième fournisseur nm_idp4...

Dans notre exemple, l'utilisateur sélectionne la donnée d'identité certifiée correspondant au nom fourni par le deuxième fournisseur d'identités certifiées nm_idp2 pour cette première donnée d'identités certifiées du profil en cours de génération.

La [Fig.8] illustre un schéma simplifié de l'interface utilisateur montrant un exemple de profil généré selon l'invention.

L'écran 917 reproduit l'ensemble des données d'identités certifiées du profil $p_U$. En l'occurrence, le profil $p_U$ comporte :

- un nom nm fourni par le deuxième fournisseur d'identités certifiées idp2 ;
- une civilité cv fournie par le deuxième fournisseur d'identités certifiées idp2 ;
- un prénom fnm fourni par le deuxième fournisseur d'identités certifiées idp2 ;
- une date de naissance bd fournie par le quatrième fournisseur d'identités certifiées idp4 ;
- une adresse nm fournie par le premier fournisseur d'identités certifiées idp1 ;
- un email em fourni par le deuxième fournisseur d'identités certifiées idp2 ; etc.

Ainsi, si l'écran 917 est affiché lors d'un procédé de gestion de profils P_MNGT, l'utilisateur peut sélectionner une donnée d'identités certifiées à retirer du profil.

Ainsi, si l'écran 917 est affiché lors d'un procédé de fourniture de données d'identités certifiées d'un profil P_PV, l'utilisateur peut sélectionner dans les données d'identités certifiées du profil un ou plusieurs des données d'identités certifiées à transmettre à un fournisseur de services requérant.

L'invention propose donc notamment un procédé et un système de gestion de profils d'identités préservant la vie privée des utilisateurs. Le système est notamment composé d'une application mobile (programme d'ordinateur apte à exécuter les étapes du procédé de gestion de profils d'identités certifiées) permettant à un utilisateur d'obtenir ses données d'identité certifiées auprès d'au moins un fournisseur d'identités certifiées auprès duquel il est enregistré. Cette application permet de fournir de manière asynchrone avec ses fournisseurs d'identités certifiées, ses données d'identités certifiées aux fournisseurs de services auxquels il accède.

Ainsi, l'invention permet la maîtrise par l'utilisateur dans le partage de ses données d'identités certifiées. En outre, la communication des données d'identités certifiées à un fournisseur de service est effectuée sans que le(les) fournisseur(s) d'identités certifiées soi(en)t impliqué(s).

L'objet de l'invention est donc la constitution d'un ou plusieurs profils intégrant des données d'identités certifiées pour satisfaire à l'accès à certains services fournis par un ou plusieurs fournisseurs de services.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

**Revendications**

1. Procédé de génération de profils d'identités certifiées associés à un compte utilisateur d'un portefeuille électronique d'identités, le procédé de génération comportant :

   - sélectionner, à destination d'un profil d'identités certifiées, des données d'identités parmi un ensemble des données d'identités reçues d'au moins un fournisseur d'identité certifiée associé au compte utilisateur, puis
- intégrer des données d'identités sélectionnées dans le profil d'identités certifiées destinataire.

2. Procédé de génération selon la revendication précédente dans lequel la sélection d'au moins une donnée d'identité est effectuée en fonction de données d'identités requises par au moins un fournisseur de services.

3. Procédé de génération selon l'une des revendications précédentes dans lequel la sélection d'au moins une donnée d'identité est effectuée en fonction d'une commande de sélection reçue d'une interface utilisateur.

4. Procédé de génération selon l'une des revendications précédentes, le procédé de génération comportant :
enregistrer le profil généré d'identités certifiées.

5. Procédé de génération selon l'une des revendications précédentes, dans lequel, lorsque le profil d'identités certifiées est destiné à un type de fournisseur de service, la sélection est effectuée en fonction du type de fournisseur de services associé au profil d'identités certifiées.

6. Procédé de génération selon l'une des revendications précédentes, dans lequel l'intégration des données d'identités sélectionnées dans le profil d'identités certifiées est déclenchée dès que le portefeuille électronique d'identités fournit les données d'identités sélectionnés à un fournisseur de service, le profil d'identités certifiées étant associé au fournisseur de service.

7. Procédé de fourniture de données d'identités certifiées à un fournisseur de service, le procédé de fourniture comportant

- récupérer dans les données d'identités d'un profil d'identités certifiées des données d'identités requises par un fournisseur de service, et
- transmettre les données d'identités récupérées du profil d'identités certifiées au fournisseur de services requérant.

8. Procédé de fourniture selon la revendication précédente, le procédé de fourniture comportant
recevoir un accord de transmission préalablement à la transmission des données d'identités.

9. Procédé de fourniture selon la revendication précédente, dans lequel la récupération de données d'identités à destination d'un fournisseur de services est effectuée dans un profil d'identité ayant préalablement servi à la fourniture de données d'identités certifiées au même fournisseur de service.

10. Procédé de gestion de profils d'identités certifiées associé à un compte utilisateur d'un portefeuille électronique d'identités, le procédé de gestion comportant
générer un profil d'identités certifiées selon l'une des revendications 1 à 6.

11. Procédé de gestion selon la revendication précédente, le procédé de gestion comportant
modifier un profil d'identités certifiées par modification d'au moins une donnée d'identité du profil d'identités certifiées.

12. Procédé de gestion selon la revendication précédente, dans lequel la modification est une modification parmi les suivantes :

- ajouter une donnée d'identité sélectionnée, à destination du profil d'identités certifiées, parmi un ensemble de données d'identités reçues d'au moins un fournisseur d'identité certifiée associé au compte utilisateur ;
- supprimer une donnée d'identité du profil d'identités certifiées.

13. Procédé de gestion selon l'une des revendication 8 à 10, le procédé de gestion comportant
fournir des données d'identités à un fournisseur de services selon la revendication 7

14. Programme comprenant des instructions de code de programme pour l'exécution des étapes du procédé de génération de profils d'identités certifiées selon l'une quelconque des revendications 1 à 6 et/ou du procédé de fourniture de données d'identités certifiées selon la revendication 7 et/ou du procédé de gestion de profils d'identités certifiées selon l'une quelconque des revendications 8 à 11 lorsque ledit programme est exécuté par un processeur.

15. Portefeuille électronique d'identités apte à fournir des données d'identités certifiées comportant un générateur de profils d'identités certifiées associés à un compte utilisateur du portefeuille électronique d'identités, le générateur de profils d'identités certifiées étant apte à :

- sélectionner, à destination d'un profil d'identités certifiées, des données d'identités parmi un ensemble des données d'identités reçues d'au moins un fournisseur d'identité certifiée associé au compte utilisateur, puis
- intégrer des données d'identités sélectionnées dans le profil d'identités certifiées destinataire.

P_GN

**Fig. 1**

**Fig. 2**

**Fig. 3**

**Fig. 4**

## Fig. 5

id1
9
U
P Pass Wallet
917I    917G
917s
917
917M    917PV

## Fig. 6a

≡  IDP_Lst    mn_id

IDP1    IDP2

IDP3    IDP4

IDP_gd

917

## Fig. 7a

≡  dmn_Lst

DMN 1=nm
DMN 2=adr
•
•
•
DMN m=pnb

917

## Fig. 6b

←  IDP_slct  X
upd_dt
IDP2    09/02/2023  17:30
MAJ
idc
nm
Hedrich
fnm
Nadine    917
OCV'SX
Mme/F
en
naaa@gmail.com
pnb
0712345678
adr
42,rue des Coutures,14000Caen
bd
01/01/1990

## Fig. 7b

≡  IDP1_Lst

nm_idp1
nm_idp2
nm_idp3    917
nm_idp4

## Fig. 8

≡  PU    🔍
nm
Hedrich
idp2
CV
Mme
idp2    917
fnm
Anke
idp2
bd
01/01/1990
idp4
adr
42 Rue des Coutures, 14000 Caen
idp1
em
naaa@gmail.com
idp2

**Europäisches Patentamt**
**European Patent Office**
**Office européen des brevets**

# RAPPORT DE RECHERCHE EUROPEENNE

Numéro de la demande

EP 24 18 2470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Rolf Oppliger ET AL: "Security of Microsoft's Identity Metasystem and CardSpace", , 1 mars 2007 (2007-03-01), XP055116240, Extrait de l'Internet: URL:http://ieeexplore.ieee.org/ielx5/57554 57/5755458/05755470.pdf?tp=&arnumber=57554 70&isnumber=5755458 [extrait le 2014-05-02] * section 3; figure 1 * | 1-15 | INV. G06F21/33 G06F21/41 G06F21/62 H04L9/40 |
| X | US 2009/300742 A1 (AHN GAIL-JOON [US]) 3 décembre 2009 (2009-12-03) * alinéas [0020] - [0025], [0045] - [0055], [0067], [0070], [0086] - [0087] * | 1-15 | |
| X | GB 2 448 396 A (SYMANTEC CORP [US]) 15 octobre 2008 (2008-10-15) * alinéas [0005] - [0026]; figure 3 * | 1-15 | DOMAINES TECHNIQUES RECHERCHES (IPC) |
| A | MAINA KORIR SIMON PARKIN TU DELFT UNIVERSITY OF BEDFORDSHIRE? MAINA KORIR@BEDS AC UK S E PARKIN@TUDELFT NL PAUL DUNPHY ONESPAN PAU: "An Empirical Study of a Decentralized Identity Wallet: Usability, Security, and Perspectives on User Control", USENIX, USENIX, THE ADVANCED COMPUTING SYSTEMS ASSOCIATION , 9 août 2022 (2022-08-09), pages 202-218, XP061072601, Extrait de l'Internet: URL:http://www.usenix.org/system/files/sou ps2022_full_proceedings_interior.pdf * le document en entier * | 1-15 | G06F H04L |

Le présent rapport a été établi pour toutes les revendications

| Lieu de la recherche | Date d'achèvement de la recherche | Examinateur |
|---|---|---|
| Munich | 9 octobre 2024 | Veillas, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 24 18 2470

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-10-2024

| Document brevet cité au rapport de recherche | | Date de publication | Membre(s) de la famille de brevet(s) | | Date de publication |
|---|---|---|---|---|---|
| US 2009300742 | A1 | 03-12-2009 | US | 8984584 B1 | 17-03-2015 |
| | | | US | 9178864 B1 | 03-11-2015 |
| | | | US | 9203867 B1 | 01-12-2015 |
| | | | US | 9338188 B1 | 10-05-2016 |
| | | | US | 9407623 B1 | 02-08-2016 |
| | | | US | 9407666 B1 | 02-08-2016 |
| | | | US | 9531698 B1 | 27-12-2016 |
| | | | US | 9596269 B1 | 14-03-2017 |
| | | | US | 9602547 B1 | 21-03-2017 |
| | | | US | 9672381 B1 | 06-06-2017 |
| | | | US | 9769163 B1 | 19-09-2017 |
| | | | US | 9800618 B1 | 24-10-2017 |
| | | | US | 9935935 B1 | 03-04-2018 |
| | | | US | 10051009 B1 | 14-08-2018 |
| | | | US | 10122732 B1 | 06-11-2018 |
| | | | US | 10298568 B1 | 21-05-2019 |
| | | | US | 10346636 B1 | 09-07-2019 |
| | | | US | 10348769 B1 | 09-07-2019 |
| | | | US | 10402591 B1 | 03-09-2019 |
| | | | US | 10581921 B1 | 03-03-2020 |
| | | | US | 2009300512 A1 | 03-12-2009 |
| | | | US | 2009300714 A1 | 03-12-2009 |
| | | | US | 2009300715 A1 | 03-12-2009 |
| | | | US | 2009300716 A1 | 03-12-2009 |
| | | | US | 2009300742 A1 | 03-12-2009 |
| | | | US | 2009300746 A1 | 03-12-2009 |
| | | | US | 2009300747 A1 | 03-12-2009 |
| GB 2448396 | A | 15-10-2008 | CN | 101286847 A | 15-10-2008 |
| | | | GB | 2448396 A | 15-10-2008 |
| | | | JP | 5300045 B2 | 25-09-2013 |
| | | | JP | 2008282388 A | 20-11-2008 |
| | | | US | 2008256594 A1 | 16-10-2008 |

EPO FORM P0460

Pour tout renseignement concernant cette annexe : voir Journal Officiel de l'Office européen des brevets, No.12/82